# FASCICULE DE BREVET EUROPEEN

(11) **EP 4 386 985 B1**
(45) Date de publication et mention de la délivrance du brevet: **22.04.2026**
(21) Numéro de dépôt: 23216618.1
(22) Date de dépôt: 14.12.2023
(51) Int. Cl.: H01Q 1/46, H04B 1/40, E06B 9/72, H04B 3/56, E06B 9/68

(54) **SYSTÈME DE COMMANDE PAR SIGNAUX RADIOFRÉQUENCES D'UN APPAREIL ÉLECTRIQUE DOMESTIQUE, COMPORTANT UN COUPLEUR SUR CIRCUIT IMPRIMÉ**
HOCHFREQUENZSIGNALSTEUERUNGSSYSTEM FÜR EIN ELEKTRISCHES HAUSHALTSGERÄT MIT EINEM KOPPLER AUF EINER LEITERPLATTE
SYSTEM FOR CONTROLLING A HOUSEHOLD ELECTRICAL APPLIANCE BY RADIOFREQUENCY SIGNALS, COMPRISING A COUPLER ON A PRINTED CIRCUIT

(30) Priorité: 14.12.2022 FR 2213376
(43) Date de publication de la demande: 19.06.2024
(73) Titulaire: Profalux Industrie, 74300 Thyez (FR)
(72) Inventeur: GUICHAOUA, Claude, 29000 Quimper (FR); BOTELLA, Mickaël, 74300 Thyez (FR); MARTINEZ, Alexandre, 74800 Amancy (FR)
(74) Mandataire: Cabinet Beau de Loménie

(56) Documents cités:
- FR-A1- 2 944 385
- US-A1- 2004 162 040

## Description

### Domaine Technique

La présente invention concerne le domaine technique de la commande par signaux radiofréquences d'un appareil électrique domestique alimenté en énergie électrique par un réseau d'alimentation électrique.

La présente invention trouve des applications particulièrement avantageuses dans le domaine de la commande des actionneurs électromécaniques mis en œuvre dans une installation de fermeture ou de protection solaire par écrans, stores ou volets par exemple.

### Technique antérieure

Dans l'état de la technique, les actionneurs électromécaniques mis en œuvre dans une installation de fermeture ou de protection sont connus pour être équipés d'un récepteur et émetteur de radiofréquences muni d'une antenne réceptrice et émettrice, permettant d'en augmenter la sensibilité et donc la portée de transmission entre un émetteur radiofréquences, nomade ou fixe, et le récepteur radiofréquences.

L'antenne réceptrice et émettrice est un élément sensible et fragile. De plus, l'actionneur est souvent disposé dans une enveloppe métallique qui oblige à déporter l'antenne à l'extérieur de l'enveloppe pour préserver la sensibilité du récepteur radiofréquences.

De nombreuses solutions techniques ont été proposées pour utiliser le câble d'alimentation électrique de l'actionneur pour loger une partie de l'antenne, ou pour utiliser un conducteur de phase et/ou un conducteur de neutre comme antenne, soit par un couplage direct, soit par un couplage partiel.

Par exemple, le brevet EP 2 109 226 décrit un dispositif de commande par signaux radiofréquences d'un appareil électrique domestique alimenté en énergie électrique par un réseau d'alimentation électrique. Le dispositif de commande par signaux radiofréquences comprend une unité radiofréquences d'émission et/ou de réception de signaux radiofréquences. Le dispositif de commande par signaux radiofréquences comprend un premier conducteur électrique et un deuxième conducteur électrique d'alimentation en énergie électrique.

Le dispositif de commande par signaux radiofréquences comprend une antenne reliée électriquement à l'unité radiofréquences. Au moins l'un des deux conducteurs électriques du réseau d'alimentation électrique constitue une antenne réceptrice ou émettrice pour les signaux radiofréquences. L'unité radiofréquences comprend une sortie et/ou une entrée de signaux radiofréquences reliée électriquement à un point de connexion d'un coupleur.

Le dispositif de commande par signaux radiofréquences comprend une carte de circuit imprimé sur laquelle sont imprimées des spires formant un bobinage pour réaliser le coupleur. La liaison électrique entre la sortie et/ou l'entrée de signaux radiofréquences de l'unité radiofréquences et le point de connexion du coupleur permet de relier électriquement la sortie et/ou l'entrée de signaux radiofréquences de l'unité radiofréquences à une borne additionnelle du bobinage située entre les deux bornes d'extrémité du bobinage.

Le coupleur est connecté via une première extrémité, au premier conducteur électrique du dispositif de commande de signaux radiofréquences et via une deuxième extrémité, à une tension de référence de l'unité radiofréquences. Le coupleur est traversé entre ses première et deuxième extrémités, par le courant du réseau d'alimentation électrique qui alimente l'appareil électrique domestique.

Cependant, ce dispositif de commande par signaux radiofréquences présente l'inconvénient de réaliser le coupleur au moyen d'un bobinage formé par des spires imprimées sur la carte de circuit imprimé du dispositif de commande par signaux radiofréquences. Dans le cas où un fort courant alimente l'appareil électrique domestique, un tel bobinage formé par des spires imprimées présente un encombrement important sur la carte de circuit imprimé à cause de la largeur des pistes de la carte de circuit imprimée réalisant le bobinage et le conducteur électrique relié électriquement au bobinage.

En effet, le dimensionnement de ces pistes de la carte de circuit imprimé est lié à la valeur du courant d'alimentation de l'appareil électrique domestique traversant le coupleur constitué du bobinage formé par des spires imprimées. Par conséquent, l'emplacement occupé par le bobinage sur la carte de circuit imprimé augmente le coût d'obtention de la carte de circuit imprimé du dispositif de commande par signaux radiofréquences et nécessite un logement dans l'appareil électrique domestique de taille importante pour l'assemblage de la carte de circuit imprimé.

Par conséquent, la réalisation de la carte de circuit imprimé avec un tel bobinage formé par des spires imprimées est complexe à industrialiser, engendre des difficultés pour garantir la fiabilité du dispositif de commande par signaux radiofréquences, lors d'une production en série, et augmente le coût d'obtention de la carte de circuit imprimé du dispositif de commande par signaux radiofréquences.

Pour tenter de remédier à ces inconvénients, le brevet EP 3 221 970 propose un dispositif de commande par signaux radiofréquences d'un appareil électrique domestique permettant d'implanter un coupleur sur une carte de circuit imprimé du dispositif de commande, tout en s'affranchissant des problématiques liées à la valeur de courant du réseau d'alimentation électrique circulant dans le coupleur et/ou à la valeur de la fréquence de travail de l'unité radiofréquences. Selon ce brevet, le coupleur est formé par une ligne de transmission imprimée sur la carte de circuit imprimé, une première extrémité de la ligne de transmission imprimée étant reliée électriquement au premier conducteur électrique du dispositif de commande tandis que la deuxième extrémité de la ligne de transmission imprimée est reliée électriquement à une première tension de référence. Par ailleurs, le point de connexion du coupleur constitué par la ligne de transmission imprimée est disposé entre les première et deuxième extrémités de la ligne de transmission imprimée. De plus, le dispositif de commande comprend une antenne reliée électriquement à l'unité radiofréquences par l'intermédiaire d'un des conducteurs électriques du réseau d'alimentation électrique, le premier conducteur électrique du dispositif de commande étant relié au réseau d'alimentation électrique, et le coupleur adaptant l'impédance de sortie et/ou d'entrée de l'unité radiofréquences à l'impédance de l'antenne.

Un inconvénient du dispositif de commande décrit par ce brevet est la nécessité de réaliser le coupleur parallèlement à la ligne de transmission. Cette contrainte limite les possibilités de configuration du circuit imprimé sur la carte de circuit imprimé. Par ailleurs, le coupleur est relié à une tension de référence ne permettant pas une isolation électrique entre le réseau d'alimentation électrique et l'unité radiofréquences. Il est à noter que le fonctionnement du dispositif de commande décrit par ce brevet est sensible à la charge et à l'impédance de l'actionneur électromécanique.

Le document FR 2 944 385 décrit un système de commande par signaux radiofréquences d'un appareil électrique domestique piloté par une unité de gestion et alimenté en énergie électrique par un premier conducteur électrique CE1 et un deuxième conducteur électrique d'un réseau d'alimentation électrique. Ce système comprend un coupleur des signaux radiofréquences comportant une ligne de transmission imprimée sur une carte de circuit imprimé et comportant une première extrémité reliée au premier conducteur électrique et une deuxième extrémité reliée à l'unité de gestion. Le coupleur comporte en tant qu'antenne, une structure de pistes gravées qui forme un bobinage autour d'un conducteur électrique couplé à ses extrémités, à un plan de référence dans des zones P1 et P2. Ce système comprend une unité radiofréquences d'émission et/ou de réception de signaux radiofréquences comprenant une entrée et/ou sortie de signaux radiofréquences reliée électriquement à l'antenne. Un inconvénient de ce dispositif de commande concerne la réalisation de l'antenne sous la forme de pistes gravées autour de la ligne de transmission. La mise au point de ce dispositif de couplage, n'est pas aisé, et nécessite la prise en compte d'au minimum 5 paramètres physiques pour sa conception : La distance entre l'antenne et la ligne CE1, la longueur de la zone de couplage, la largeur des lignes dans la zone de couplage, l'impédance de charge dans la zone P1 et l'impédance de charge dans la zone P2. En conséquence, le dispositif semble assez difficile à mettre au point, et difficilement transposable d'un dispositif vers un autre dispositif. D'autre part, la conception des impédances de charge n'est pas décrite, et semble complexe à réaliser, avec probablement un risque de dispersion importante dans les caractéristiques et les performances du dispositif.

Le document FR 2 944 385 A1 décrit un dispositif d'émission/réception de signaux radiofréquences pour appareils domestiques alimentés par un réseau électrique permettant la commande et la transmission d'informations.

### Exposé de l'invention

La présente invention vise à remédier aux inconvénients de l'art antérieur en proposant un système de commande par signaux radiofréquences d'un appareil électrique domestique permettant d'implanter complétement, le coupleur des signaux radiofréquences, sur une carte de circuit imprimé sans nécessiter de composants électroniques.

Un autre objet de l'invention est de fournir un système de commande par signaux radiofréquences d'un appareil électrique domestique, conçu pour optimiser la circulation des signaux radiofréquences entre l'antenne et l'unité radiofréquences.

Un autre objet de l'invention est de proposer un système de commande dont le comportement est insensible par rapport à la variation d'impédance de l'appareil électrique domestique.

Pour atteindre ces objectifs, le système de commande selon l'invention comprend:
- une carte de circuit imprimé ;
- un coupleur des signaux radiofréquences, comportant au moins une ligne de transmission imprimée sur la carte de circuit imprimé selon une direction d'extension et comportant une première extrémité reliée au premier conducteur électrique et une deuxième extrémité reliée à l'unité de gestion, le coupleur comportant au moins une ligne de couplage imprimée sur la carte de circuit imprimé;
- une unité radiofréquences d'émission et/ou de réception de signaux radiofréquences comprenant une entrée et/ou sortie de signaux radiofréquences reliée électriquement à un point de liaison de la ligne de couplage du coupleur, caractérisé en ce que :

- le coupleur comporte un tronçon de ligne imprimé sur la carte de circuit imprimé en présentant une extrémité libre et étant raccordé en dérivation de la ligne de transmission, en un point de connexion, la ligne de couplage comportant une partie de couplage s'étendant sans contact électrique, parallèlement au tronçon de ligne ;
- et en ce qu'un circuit de blocage des signaux radiofréquences, est imprimé sur la carte de circuit imprimé et connecté par une seule extrémité, sur la ligne de transmission en un point de raccordement entre le point de connexion du tronçon de ligne du coupleur et l'unité de gestion.

Selon une caractéristique de l'invention, la ligne de couplage du coupleur est configurée pour former une ligne quart d'onde.

Selon un exemple de réalisation, la ligne de couplage comporte deux parties de couplage imprimées pour présenter une configuration sous la forme d'un U entourant sans contact électrique, le tronçon de ligne.

Selon un autre exemple de réalisation, la ligne de couplage du coupleur est imprimée pour présenter une configuration rectiligne ou sous la forme d'un L.

Selon un autre exemple de réalisation, le tronçon de ligne est imprimé sur la carte de circuit imprimé selon une direction non parallèle à la direction d'extension de la ligne de transmission.

Avantageusement, les directions du tronçon de ligne et de la ligne de transmission forment entre elles un angle compris entre 30° et 150°.

Selon un exemple préféré de mise en œuvre, le coupleur est configuré de manière à assurer une atténuation inférieure à 3dB entre le point de liaison du coupleur et la première extrémité de la ligne de transmission reliée au premier conducteur électrique.

Selon une caractéristique de l'invention, le circuit de blocage comporte une portion de ligne imprimée sur la carte de circuit imprimé en présentant une extrémité libre.

Selon une autre caractéristique de l'invention, la portion de ligne du circuit de blocage présente une longueur électrique adaptée de manière qu'en fonction de la longueur de la ligne de transmission entre le point de connexion du coupleur et le point de raccordement du circuit de blocage, les signaux radiofréquences se trouvent bloqués au point de connexion du coupleur, avec une atténuation supérieure à 10db.

Avantageusement, le circuit de blocage comporte une longueur électrique entre le point de connexion du coupleur et l'extrémité libre de la portion de ligne égale à Lambda/2, Lambda étant la longueur d'onde.

Un autre objet de l'invention est de proposer un appareil électrique domestique comprenant un système de commande par signaux radiofréquences conforme à l'invention.

### Brève description des dessins

[Fig. 1] La figure 1 est un schéma électrique simplifié d'un système conforme à l'invention, de commande par signaux radiofréquences d'un appareil électrique domestique.
[Fig. 2] La figure 2 représente un exemple de réalisation d'un schéma électrique aménagé sur une carte de circuit imprimé mis en œuvre dans le système de commande par signaux radiofréquences d'un appareil électrique domestique.
[Fig. 3] La figure 3 est un schéma d'un autre exemple de réalisation d'un coupleur mis en œuvre dans le système de commande conforme à l'invention.
[Fig. 4] La figure 4 est un schéma d'un autre exemple de réalisation d'un coupleur mis en œuvre dans le système de commande conforme à l'invention.
[Fig. 5] La figure 5 est un schéma d'un autre exemple de réalisation d'un coupleur mis en œuvre dans le système de commande conforme à l'invention Description des modes de réalisation

Tel que cela ressort des figures, l'objet de l'invention concerne un système de commande 1 par signaux radiofréquences d'un appareil électrique domestique 2 piloté par une unité de gestion 3. L'appareil électrique domestique 2 et l'unité de gestion 3 sont alimentés en énergie électrique par un câble d'alimentation électrique 4 comportant un premier conducteur électrique 5 par exemple de neutre et un deuxième conducteur électrique 6 par exemple de phase. Par ailleurs, le câble d'alimentation électrique 4 qui est alimenté en énergie électrique par le réseau d'alimentation électrique peut comprendre un conducteur électrique de protection. Le conducteur électrique de protection du câble d'alimentation électrique 4 est relié à la terre et à une structure métallique de l'appareil électrique domestique 2.

Selon une application avantageuse, l'appareil électrique domestique 2 comporte un actionneur électromécanique pour une installation domotique de fermeture ou de protection solaire. Comme décrit par exemple dans la demande de brevet EP 3 221 970, l'actionneur électromécanique comporte un moteur électrique 2a logé dans un tube d'enroulement d'un écran du type volet roulant ou store. Il est à noter que le système de commande 1 conforme à l'invention est adapté pour piloter en tant qu'appareil électrique domestique 2, par exemple, un dispositif de ventilation ou d'alarme, un système de détection de paramètres météorologiques équipant un bâtiment ou son environnement extérieur.

Le système de commande 1 comporte une unité radiofréquences 7 d'émission et/ou de réception de signaux radiofréquences permettant de commander l'appareil électrique domestique 2. Cette unité radiofréquences 7 est alimentée par un convertisseur d'énergie de tous types connus en soi, non représenté et relié au réseau d'alimentation électrique 4. Cette unité radiofréquences 7 comprend une sortie et/ou une entrée Sa de signaux radiofréquences provenant d'un appareil de commande 8 localisé ou centralisé tel qu'une télécommande ou un autre appareil radiofréquences.

Les signaux radiofréquences émis par l'appareil de commande 8 comportent des ordres de commande de l'appareil électrique domestique et plus précisément selon l'exemple illustré, du moteur électrique 2a. Les ordres de commande reçus par l'unité radiofréquences 7 sont transmis à l'unité de gestion 3 du moteur électrique 2a, de sorte à commander un entraînement en rotation dans un premier sens de rotation ou dans un deuxième sens de rotation ou encore à arrêter l'entraînement en rotation. Dans un mode avantageux de réalisation, l'unité radiofréquences 7 permet également d'émettre vers l'appareil de commande 8, via son entrée/sortie Sa, des signaux véhiculés par ondes radiofréquences et comportant, notamment, des informations relatives au fonctionnement du moteur électrique 2a.

Le système de commande 1 comporte une carte de circuit imprimé 9 sur laquelle sont montés les composants de l'unité de gestion 3 et de l'unité radiofréquences 7. Le premier conducteur électrique 5 et le deuxième conducteur électrique 6 sont également aménagés en partie sur la carte de circuit imprimé 9.

Conformément à l'invention, l'entrée/sortie Sa de l'unité radiofréquences 7 est relié électriquement à un point de liaison Pl d'un coupleur 10 des signaux radiofréquences véhiculés par un conducteur électrique du câble d'alimentation électrique 4, à savoir le premier conducteur électrique 5 dans l'exemple illustré. Conformément à l'invention, le coupleur 10 est aménagé sur la carte de circuit imprimé 9 sur laquelle est aménagé également, un circuit de blocage 12 des signaux radiofréquences, en direction de l'appareil électrique domestique 2, comme cela sera expliqué en détail dans la suite de la description.

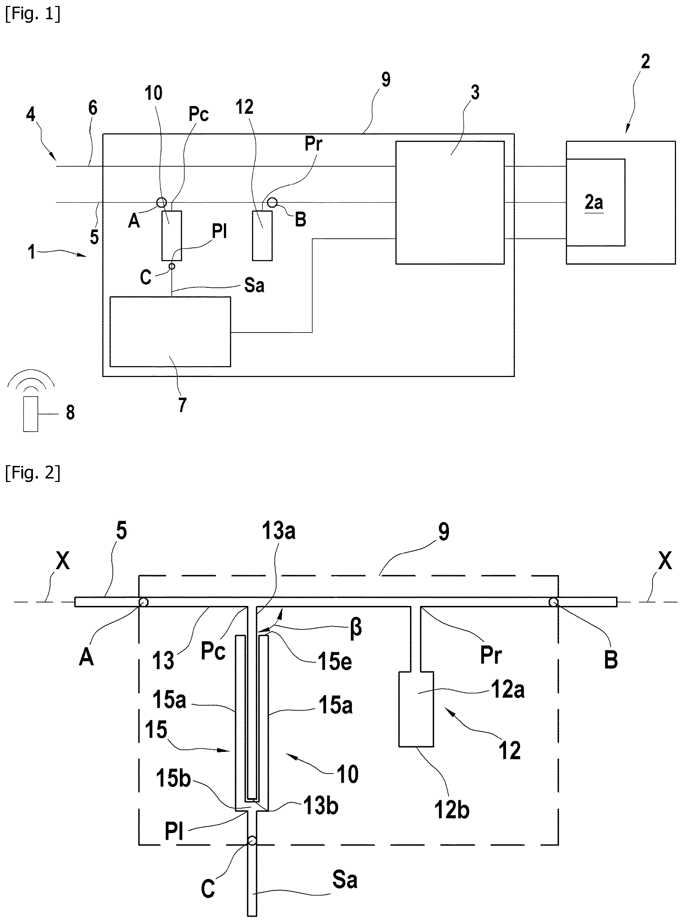

Tel que cela ressort des figures 1 et 2, le coupleur 10 des signaux radiofréquences comporte au moins une ligne de transmission 13 imprimée sur la carte de circuit imprimé 9 selon une direction d'extension X-X rectiligne dans l'exemple illustré. Une première extrémité de cette ligne de transmission 13 est reliée au premier conducteur électrique 5 en un point A tandis que la deuxième extrémité de cette ligne de transmission 13 est reliée à l'unité de gestion 3 du moteur électrique 2a, en un point B du premier conducteur électrique 5 alimentant l'unité de gestion 3.

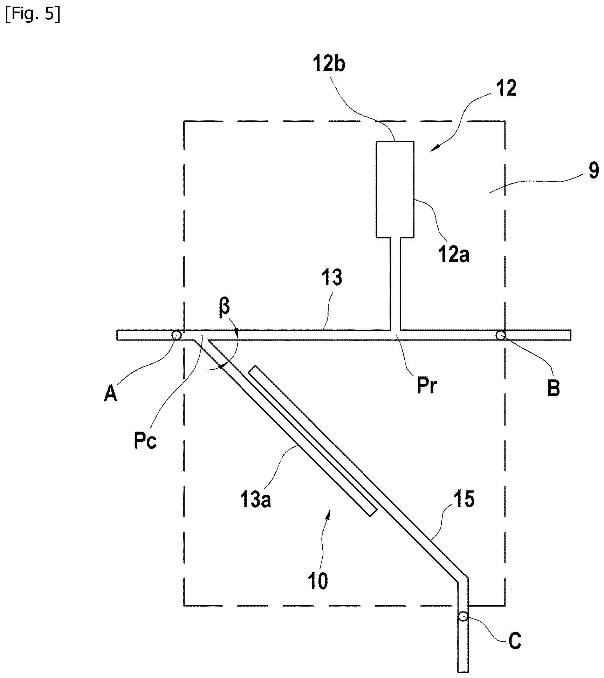

Le coupleur 10 comporte un tronçon de ligne 13a imprimé sur la carte de circuit imprimé 9 en étant raccordé en dérivation de la ligne de transmission 13, en un point de connexion Pc. Ce tronçon de ligne 13a présente à l'opposé de son extrémité raccordée à la ligne de transmission 13, une extrémité libre 13b en circuit ouvert. Selon une caractéristique avantageuse de réalisation, le tronçon de ligne 13a est imprimé sur la carte de circuit imprimé 9 selon une direction non parallèle à la direction d'extension X-X de la ligne de transmission 13. Avantageusement, les directions du tronçon de ligne 13a et de la ligne de transmission 13 forment entre elles un angle β compris entre 30° et 150°. Dans l'exemple illustré à la figure 2, le tronçon de ligne 13a est imprimé sur la carte de circuit imprimé 9, avantageusement selon une direction perpendiculaire à la direction d'extension X-X de la ligne de transmission 13 (β= 90°). Dans l'exemple de réalisation illustré à la figure 5, le tronçon de ligne 13a est imprimé sur la carte de circuit imprimé 9, selon une direction formant un angle β= 45° par rapport à la ligne de transmission 13.

Dans le même sens, il est à noter que sur les figures, le tronçon de ligne 13a est imprimé sur la carte de circuit imprimé 9 avec une forme rectiligne. Bien entendu, le tronçon de ligne 13a peut être imprimé sur la carte de circuit imprimé 9 avec une ou plusieurs courbures.

Le coupleur 10 comporte une ligne de couplage 15 imprimée sur la carte de circuit imprimé 9 et présentant au moins une partie 15a s'étendant sans contact électrique, parallèlement au tronçon de ligne 13a. Cette ligne de couplage 15 est imprimée sur la carte de circuit imprimé 9 en présentant au moins une extrémité libre 15e en circuit ouvert et à l'opposé, une extrémité reliée à un point C de raccordement avec l'entrée/sortie Sa de l'unité radiofréquences 7.

Avantageusement, la ligne de couplage 15 du coupleur est configurée pour former une ligne quart d'onde. Classiquement, la ligne de couplage 15 est formée par un conducteur imprimé sur la carte de circuit imprimé présentant une longueur électrique qui est sensiblement égale au quart de la longueur d'onde de la fréquence des signaux radiofréquences utilisés pour la commande de l'appareil électrique domestique. Quelle que soit la fréquence, la longueur électrique de la ligne de couplage 15 avoisine un quart de longueur d'onde de cette fréquence.

Cette ligne de couplage 15 peut présenter différentes configurations. Selon une variante avantageuse illustrée à la figure 2, la ligne de couplage 15 du coupleur est imprimée pour présenter une configuration sous la forme d'un U entourant sans contact électrique, le tronçon de ligne 13a. Selon cet exemple, la ligne de couplage 15 comporte deux parties de couplage 15a s'étendant de part et d'autre du tronçon de ligne 13a et parallèlement entre elles et au tronçon de ligne 13a. Ces deux parties de couplage 15a comportent des extrémités libres 15e en circuit ouvert, situées à proximité de la ligne de transmission 13 et des extrémités opposées reliées entre elles par un segment de liaison 15b connecté au point de raccordement C. Ce couplage en forme de U permet de minimiser les pertes de couplage. Cette solution permet également d'obtenir une forme compacte.

Dans l'exemple illustré, les parties de couplage 15a sont rectilignes puisque le tronçon de ligne 13a est rectiligne. Bien entendu, comme expliqué ci-dessus, le tronçon de ligne 13a peut être imprimé sur la carte de circuit imprimé 9 selon une direction non rectiligne. Dans ce cas, les parties de couplage 15a de la ligne de couplage 15 sont imprimées sur la carte de circuit imprimé 9 en s'étendant sans contact électrique, selon une direction non rectiligne, parallèlement au tronçon de ligne 13a.

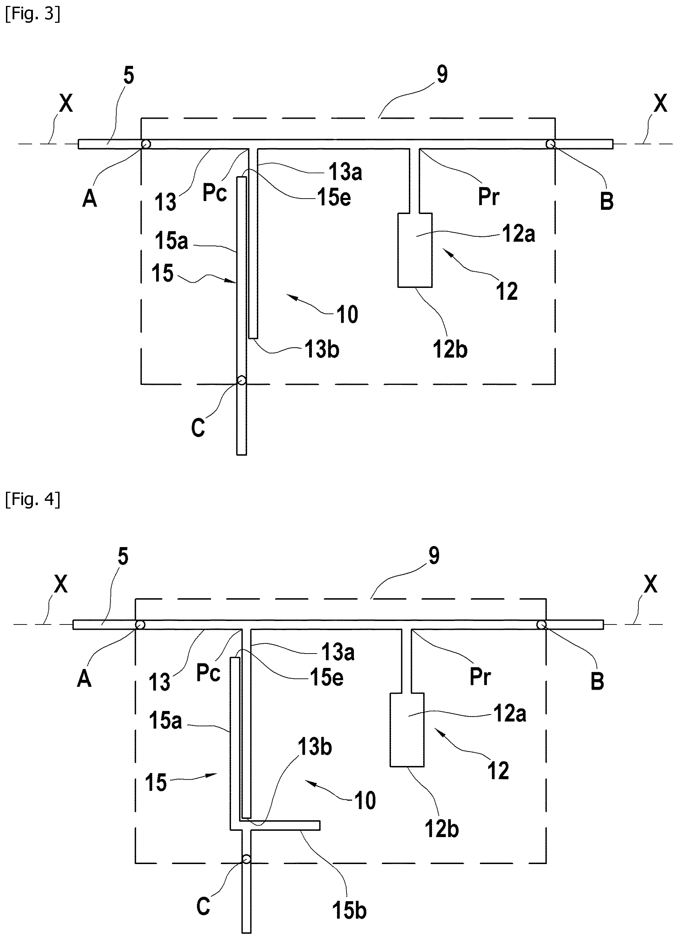

La figure 3 illustre un autre exemple de réalisation dans lequel la ligne de couplage 15 du coupleur 10 est imprimée pour présenter une configuration rectiligne. Selon cet exemple, la ligne de couplage 15 du coupleur comporte une partie de couplage 15a s'étendant sans contact électrique, parallèlement au tronçon de ligne 13a, sensiblement sur toute la longueur du tronçon de ligne 13a. Cette partie de couplage 15a présente une extrémité libre 15e en circuit ouvert, située à proximité de la ligne de transmission 13 et une extrémité opposée connectée au point de raccordement C. Il est à noter que dans l'exemple de réalisation illustré à la figure 5, la ligne de couplage 15 du coupleur 10 est imprimée pour présenter une configuration rectiligne parallèle au tronçon de ligne 13a s'étendant selon une direction formant un angle β= 45° par rapport à la ligne de transmission 13. La ligne de couplage 15 du coupleur 10 est imprimée parallèlement au tronçon de ligne 13a sur l'un ou l'autre de ses côtés.

La figure 4 illustre un autre exemple de réalisation dans lequel la ligne de couplage 15 du coupleur est imprimée pour présenter une configuration en L. Selon cet exemple, la ligne de couplage 15 du coupleur comporte une première partie de couplage 15a s'étendant sans contact électrique, parallèlement au tronçon de ligne 13a, sensiblement sur toute la longueur du tronçon de ligne 13a, en se prolongeant à l'équerre, au-delà de l'extrémité libre 13b du tronçon de ligne 13a, par une deuxième partie de couplage 15b. Cette première partie de couplage 15a présente une extrémité libre 15e en circuit ouvert, située à proximité de la ligne de transmission 13 tandis que la deuxième partie de couplage 15b est connectée au point de raccordement C.

Quelle que soit la forme de réalisation du coupleur 10, il doit être noté qu'il n'y a pas de contact électrique entre le premier conducteur électrique 5 et la ligne d'antenne de l'unité de radiofréquences 7 (l'entrée/sortie Sa de l'unité radiofréquences 7). L'isolation électrique entre la ligne électrique et la ligne radiofréquences est obtenue par l'isolation galvanique naturelle réalisée par la carte de circuit imprimé 9. La largeur des lignes du coupleur 10 (à savoir les parties de couplage 15a et le tronçon de ligne 13a) ainsi que l'écart entre les lignes du coupleur sont ajustés pour permettre une adaptation d'impédance entre le point de connexion Pc et le point de raccordement C de manière à maximiser le transfert d'énergie radiofréquence.

Selon une caractéristique avantageuse, le coupleur 10 est configuré de manière à obtenir une atténuation inférieure à 3dB entre le point de liaison Pc du coupleur et la première extrémité de la ligne de transmission 13 reliée au premier conducteur électrique 5.

Selon une autre caractéristique de l'invention, le système de commande 1 comporte le circuit de blocage 12 des signaux radiofréquences permettant d'assurer une réjection des signaux radiofréquences vers le moteur 2a. Ce circuit de blocage 12 est imprimé sur la carte de circuit imprimé 9 en étant connecté par une seule extrémité, sur la ligne de transmission 13 en un point de raccordement Pr situé entre le point de connexion Pc du tronçon de ligne 13a du coupleur et l'unité de gestion 3. Le circuit de blocage 12 comporte ainsi une portion de ligne 12a imprimée sur la carte de circuit imprimé 9 en présentant une extrémité libre 12b en circuit ouvert de sorte que cette portion de ligne 12a peut être considérée comme raccordée électriquement en parallèle sur la ligne de transmission 13. Cette portion de ligne 12a est connectée sur la ligne de transmission 13 au point de raccordement Pr.

Dans les exemples de réalisation illustrés aux figures 2 à 4, la portion de ligne 12a et le tronçon de ligne 13a du coupleur sont imprimés sur la carte de circuit imprimé 9, du même côté de la ligne de transmission 13. Dans l'exemple de réalisation illustré à la figure 5, la portion de ligne 12a et le tronçon de ligne 13a du coupleur sont imprimés sur la carte de circuit imprimé 9, de part et d'autre de la ligne de transmission 13.

Ce circuit de blocage 12 des signaux radiofréquences qui est conçu pour diriger ses signaux radiofréquences vers la ligne électrique et non pas vers le moteur 2a, se fait par l'intermédiaire d'un « stub » en circuit ouvert. La propriété de ce stub, est de ramener un « court-circuit » virtuel pour les signaux radiofréquences sur la ligne du premier conducteur électrique 5 vers le moteur 2a mais également un « circuit ouvert » virtuel de haute impédance au point de connexion Pc, à la fréquence souhaitée. La géométrie de ce circuit de blocage peut être réalisée de différentes façons en fonction notamment des contraintes de place disponible sur la carte de circuit imprimé 9.

La portion de ligne 12a du circuit de blocage 12 présente une longueur électrique adaptée de manière qu'en fonction de la longueur de la ligne de transmission 13 entre le point de connexion Pc du coupleur et le point de raccordement Pr du circuit de blocage, les signaux radiofréquences se trouvent bloquer au point de connexion du coupleur Pc, avec une atténuation supérieure à 10db. Idéalement, l'atténuation est supérieure à 20db. Ainsi, la ligne du premier conducteur électrique 5 présente au point de connexion Pc, une impédance élevée empêchant les signaux radiofréquences d'aller vers le moteur 2a.

Le circuit de blocage 12 comporte une longueur électrique entre le point de connexion Pc du coupleur et l'extrémité libre 12b de la portion de ligne 12a égale à Lambda/2 (Lambda étant la longueur d'onde), correspondant à une longueur électrique d'environ 180°. La largeur de la ligne de transmission 13 est ajustée afin de permettre de transmettre le signal continu sans pertes et de conserver une impédance proche de 50 Ohms. Les signaux radiofréquences sont naturellement aiguillés vers la ligne du premier conducteur électrique 5. Le circuit de blocage 12 permet avantageusement de forcer les signaux radiofréquences à circuler du point A de la ligne de transmission 13 vers le point de raccordement C et réciproquement avec une perte inférieure à 3 dB, tout en interdisant le passage de ces signaux radiofréquences du point de raccordement C vers le point B de la ligne de transmission mais également du point A de la ligne de transmission 13 vers le point B de la ligne de transmission, avec une isolation d'au minimum 10dB.

Un avantage de l'invention est que le coupleur est complètement imprimable sur un circuit imprimé et ne nécessite aucun composant électronique. Toutes les fonctions sont réalisées par de simples lignes de transmission. Ces lignes de transmission peuvent être réalisées de différentes façons comme par exemple en ligne microstrip, en ligne stripline ou coplanaire. Etant donné que les lignes sont réalisées sur un substrat diélectrique en époxy et en particulier de type FR4, toutes les longueurs ou largeurs de lignes seront dépendantes des caractéristiques physiques et électriques du substrat (Exemple : permittivité, hauteur, etc.). Toutes les longueurs de lignes sont dépendantes de la fréquence d'utilisation qui dans l'exemple illustré est 2.4GHz.

Selon un exemple de réalisation, dans le cas où fréquence de travail de l'unité radiofréquences 7 est de 2,4 GHz, la longueur dans l'air du coupleur 10 est de 30mm et la longueur dans l'air du « stub » c'est-à-dire du point de connexion Pc à l'extrémité libre 12b est de 60mm. Il est à noter que la longueur réelle sur la carte de circuit imprimé 9 sera plus petite que la longueur dans l'air puisqu'il faut tenir compte de la permittivité diélectrique de la carte de circuit imprimé 9.

Bien entendu, le système de commande par signaux radiofréquences peut également fonctionner dans une autre bande de radiofréquences, pouvant s'étendre, notamment, entre 400 MHz et 4 GHz, et pouvant prendre, notamment, des valeurs de l'ordre de 433MHz ou 868MHz.

## Revendications

1. Système de commande par signaux radiofréquences d'un appareil électrique domestique (2) piloté par une unité de gestion (3) et alimenté en énergie électrique par un premier conducteur électrique (5) et un deuxième conducteur électrique (6) d'un réseau d'alimentation électrique, le système comprenant :
- une carte de circuit imprimé (9);
- un coupleur (10) des signaux radiofréquences, comportant au moins une ligne de transmission (13) imprimée sur la carte de circuit imprimé selon une direction d'extension (X-X) et comportant une première extrémité reliée au premier conducteur électrique (5) et une deuxième extrémité reliée à l'unité de gestion, le coupleur (10) comportant au moins une ligne de couplage (15) imprimée sur la carte de circuit imprimé ;
- une unité radiofréquences (7) d'émission et/ou de réception de signaux radiofréquences comprenant une entrée et/ou sortie (Sa) de signaux radiofréquences reliée électriquement à un point de liaison (Pl) de la ligne de couplage du coupleur, - le coupleur (10) comportant un tronçon de ligne (13a) imprimé sur la carte de circuit imprimé en présentant une extrémité libre (13b) et étant raccordé en dérivation de la ligne de transmission (13), en un point de connexion (Pc), la ligne de couplage (15) comportant une partie de couplage (15a) s'étendant sans contact électrique, parallèlement au tronçon de ligne (13a);
- un circuit de blocage (12) des signaux radiofréquences étant imprimé sur la carte de circuit imprimé et connecté par une seule extrémité, sur la ligne de transmission (13)
**caractérisé en ce que**:
- le tronçon de ligne (13a) a une extrémité libre (13b),
- le circuit de blocage (12) est connecté sur la ligne de transmission (13) en un point de raccordement (Pr) entre le point de connexion (Pc) du tronçon de ligne (13a) du coupleur et l'unité de gestion (3).

2. Système de commande selon la revendication 1 selon lequel ladite au moins ligne de couplage (15) du coupleur (10) est configurée pour former une ligne quart d'onde.

3. Système de commande selon l'une des revendications précédentes selon lequel ladite au moins ligne de couplage (15) comporte deux parties de couplage (15a) imprimées pour présenter une configuration sous la forme d'un U entourant sans contact électrique, le tronçon de ligne (13a).

4. Système de commande selon l'une des revendications 1 ou 2 selon lequel ladite au moins ligne de couplage (15) du coupleur est imprimée pour présenter une configuration rectiligne ou sous la forme d'un L.

5. Système de commande selon l'une des revendications précédentes selon lequel le tronçon de ligne (13a) est imprimé sur la carte de circuit imprimé (9) selon une direction non parallèle à la direction d'extension (X-X) de la ligne de transmission.

6. Système de commande selon la revendication précédente selon lequel les directions du tronçon de ligne (13a) et de la ligne de transmission (13) forment entre elles un angle β compris entre 30° et 150°.

7. Système de commande selon l'une des revendications précédentes selon lequel le coupleur (10) est configuré de manière à assurer une atténuation inférieure à 3dB entre le point de liaison (Pc) du coupleur et la première extrémité de la ligne de transmission (13) reliée au premier conducteur électrique.

8. Système de commande selon l'une des revendications 1 à 7 selon lequel le circuit de blocage (12) comporte une portion de ligne (12a) imprimée sur la carte de circuit imprimé (9) en présentant une extrémité libre (12b).

9. Système de commande selon la revendication 8 selon lequel la portion de ligne (12a) du circuit de blocage (12) présente une longueur électrique adaptée de manière qu'en fonction de la longueur de la ligne de transmission (13) entre le point de connexion (Pc) du coupleur et le point de raccordement (Pr) du circuit de blocage (12), les signaux radiofréquences se trouvent bloqués au point de connexion du coupleur (Pc), avec une atténuation supérieure à 10db.

10. Système de commande selon l'une des revendications 8 ou 9 selon lequel le circuit de blocage (12) comporte une longueur électrique entre le point de connexion (Pc) du coupleur et l'extrémité libre (12b) de la portion de ligne (12a) égale à Lambda/2, Lambda étant la longueur d'onde.

11. Appareil électrique domestique **caractérisé en ce qu'**il comprend un système de commande (1) par signaux radiofréquences selon l'une des revendications 1 à 10.

## Patentansprüche

1. System zur Steuerung durch Hochfrequenz-Signale für ein elektrisches Haushaltsgerät (2), das durch eine Verwaltungseinheit (3) gesteuert wird und durch einen ersten elektrischen Leiter (5) und einen zweiten elektrischen Leiter (6) eines elektrischen Versorgungsnetzes mit elektrischer Energie versorgt wird, wobei das System umfasst:
- eine gedruckte Schaltungsplatte (9),
- einen Koppler (10) für Hochfrequenz-Signale, der zumindest eine Übertragungsleitung (13) beinhaltet, die gemäß einer Erstreckungsrichtung (X-X) auf die gedruckte Schaltungsplatte gedruckt ist und ein erstes Ende, das mit dem ersten elektrischen Leiter (5) verbunden ist, und ein zweites Ende beinhaltet, das mit der Verwaltungseinheit verbunden ist, wobei der Koppler (10) zumindest eine Kopplungsleitung (15) beinhaltet, die auf die gedruckte Schaltungsplatte gedruckt ist,
- eine Hochfrequenz-Einheit (7) zum Senden und/oder Empfangen von Hochfrequenz-Signalen, umfassend einen Eingang und/oder Ausgang (Sa) für Hochfrequenz-Signale, der/die elektrisch mit einem Verbindungspunkt (Pl) der Kopplungsleitung des Kopplers ist/sind,
- wobei der Koppler (10) ein Leitungs-Teilstück (13a) beinhaltet, das so auf die gedruckte Schaltungsplatte gedruckt ist, dass es ein freies Ende (13b) aufweist und in einer Abzweigung der Übertragungsleitung (13) an einem Verbindungspunkt (Pc) angeschlossen ist, wobei die Kopplungsleitung (15) einen Kopplungsteil (15a) beinhaltet, der sich ohne elektrischen Kontakt parallel zu dem Leitungs-Teilstück (13a) erstreckt,
- einen Blockier-Schaltkreis (12) für Hochfrequenz-Signale, der auf die gedruckte Schaltungsplatte gedruckt und durch ein einziges Ende mit der Übertragungsleitung (13) verbunden ist,
**dadurch gekennzeichnet, dass**:
- das Leitungs-Teilstück (13a) ein freies Ende (13b) aufweist,
- der Blockier-Schaltkreis (12) mit der Übertragungsleitung (13) an einem Anschlusspunkt (Pr) zwischen dem Verbindungspunkt (Pc) des Leitungs-Teilstücks (13a) des Kopplers und der Verwaltungseinheit (3) verbunden ist.

2. Steuersystem nach Anspruch 1, wobei die zumindest eine Kopplungsleitung (15) des Kopplers (10) dazu ausgestaltet ist, eine Viertelwellen-Leitung zu bilden.

3. Steuersystem nach einem der vorhergehenden Ansprüche, wobei die zumindest eine Kopplungsleitung (15) zwei Kopplungsteile (15a) beinhaltet, die so gedruckt sind, dass sie eine Ausgestaltung in der Form eines U aufweisen, das ohne elektrischen Kontakt das Leitungs-Teilstück (13a) umgibt.

4. Steuersystem nach einem der Ansprüche 1 oder 2, wobei die zumindest eine Kopplungsleitung (15) des Kopplers so gedruckt ist, dass sie eine geradlinige Ausgestaltung oder eine Ausgestaltung in der Form eines L aufweist.

5. Steuersystem nach einem der vorhergehenden Ansprüche, wobei das Leitungs-Teilstück (13a) auf die gedruckte Schaltungsplatte (9) gemäß einer Richtung aufgedruckt ist, die nicht parallel zu der Erstreckungsrichtung (X-X) der Übertragungsleitung ist.

6. Steuersystem nach dem vorhergehenden Anspruch, wobei die Richtungen des Leitungs-Teilstücks (13a) und der Übertragungsleitung (13) zwischen sich einen Winkel β zwischen 30° und 150° bilden.

7. Steuersystem nach einem der vorhergehenden Ansprüche, wobei der Koppler (10) auf eine Weise ausgestaltet ist, um eine Dämpfung von weniger als 3 dB zwischen dem Verbindungspunkt (Pc) des Kopplers und dem ersten Ende der Übertragungsleitung (13), die mit dem ersten elektrischen Leiter verbunden ist, sicherzustellen.

8. Steuersystem nach einem der Ansprüche 1 bis 7, wobei der Blockier-Schaltkreis (12) einen Leitungsabschnitt (12a) beinhaltet, der so auf die gedruckte Schaltungsplatte (9) aufgedruckt ist, dass er ein freies Ende (12b) aufweist.

9. Steuersystem nach Anspruch 8, wobei der Leitungsabschnitt (12a) des Blockier-Schaltkreises (12) eine elektrische Länge aufweist, die so angepasst ist, dass in Abhängigkeit von der Länge der Übertragungsleitung (13) zwischen dem Verbindungspunkt (Pc) des Kopplers und dem Anschlusspunkt (Pr) des Blockier-Schaltkreises (12) die Hochfrequenz-Signale an dem Verbindungspunkt des Kopplers (Pc) mit einer Dämpfung von mehr als 10 dB blockiert werden.

10. Steuersystem nach einem der Ansprüche 8 oder 9, wobei der Blockier-Schaltkreis (12) eine elektrische Länge zwischen dem Verbindungspunkt (Pc) des Kopplers und dem freien Ende (12b) des Leitungsabschnitts (12a) gleich Lambda/2 beinhaltet, wobei Lambda die Wellenlänge ist.

11. Elektrisches Haushaltsgerät, **dadurch gekennzeichnet, dass** es ein System (1) zur Steuerung durch Hochfrequenz-Signale nach einem der Ansprüche 1 bis 10 umfasst.

## Claims

1. A system for controlling with radiofrequency signals a home electric appliance (2) piloted by a management unit (3) and supplied with electrical energy by a first electrical conductor (5) and a second electrical conductor (6) of a power supply network, the system comprising:
- a printed circuit board (9);
- a coupler (10) of the radiofrequency signals, including at least one transmission line (13) printed on the printed circuit board along a direction of extension (X-X) and including a first end connected to the first electrical conductor (5) and a second end connected to the management unit,
the coupler (10) including at least one coupling line (15) printed on the printed circuit board;
- a radiofrequency unit (7) for emitting and/or receiving radiofrequency signals, comprising a radiofrequency signal input and/or output (Sa) electrically connected to a connection point (PI) of the coupling line of the coupler, the coupler (10) including a line segment (13a) printed on the printed circuit board by having a free end (13b) and by being joined in shunt to the transmission line (13), at a connection point (Pc), the coupling line (15) including a coupling part (15a) extending without electrical contact, parallel to the line segment (13a);
- a circuit (12) for blocking the radiofrequency signals being printed on the printed circuit board and connected at one end on the transmission line (13)
**characterized in that**:
- the line segment (13a) has a free end (13b),
- the blocking circuit (12) is connected on the transmission line (13) at a junction point (Pr) between the connection point (Pc) of the line segment (13a) of the coupler and the management unit (3).

2. The control system according to claim 1, wherein said at least one coupling line (15) of the coupler (10) is configured to form a quarterwave line.

3. The control system according to any of the preceding claims, wherein said at least one coupling line (15) includes two coupling parts (15a) printed to have a U-shaped configuration surrounding, without electrical contact, the line segment (13a).

4. The control system according any of claim 1 or 2, wherein said at least one coupling line (15) of the coupler is printed to have a rectilinear or L-shaped configuration.

5. The control system according to any of the preceding claims, wherein the line segment (13a) is printed on the printed circuit board (9) along a direction not parallel to the direction of extension (X-X) of the transmission line.

6. The control system according to the preceding claim wherein the directions of the line segment (13a) and of the transmission line (13) form together an angle β comprised between 30° and 150°.

7. The control system according to any of the preceding claims wherein the coupler (10) is configured so as to ensure an attenuation of less than 3 dB between the connection point (Pc) of the coupler and the first end of the transmission line (13) connected to the first electrical conductor.

8. The control system according to any of claims 1 to 7 wherein the blocking circuit (12) includes a line portion (12a) printed on the printed circuit board (9) by having a free end (12b).

9. The control system according to claim 8 wherein the line portion (12a) of the blocking circuit (12) has an electrical length adapted so that depending on the length of the transmission line (13) between the connection point (Pc) of the coupler and the junction point (Pr) of the blocking circuit (12), the radiofrequency signals are blocked at the connection point of the coupler (Pc), with an attenuation greater than 10 db.

10. The control system according to any of claims 8 or 9, wherein the blocking circuit (12) includes an electrical length between the connection point (Pc) of the coupler and the free end (12b) of the line portion (12a) equal to Lambda/2, Lambda being the wavelength.

11. A home electric appliance **characterized in that** it comprises a radiofrequency signal control system (1) according to any of claims 1 to 10.
